# EUROPEAN PATENT SPECIFICATION

(11) **EP 3 285 625 B1**
(45) Date of publication and mention of the grant of the patent: **02.10.2019**
(21) Application number: 16714928.5
(22) Date of filing: 07.04.2016
(51) Int. Cl.: A47J 31/41, A47J 31/00

(54) **BEVERAGE DISPENSER FOR PREPARING LAYERED BEVERAGES**
GETRÄNKESPENDER ZUR HERSTELLUNG GESCHICHTETER GETRÄNKE
DISTRIBUTEUR DE BOISSON PERMETTANT DE PRÉPARER DES BOISSONS EN COUCHES

(30) Priority: 21.04.2015 EP 15164526
(43) Date of publication of application: 28.02.2018
(73) Proprietor: Société des Produits Nestlé S.A., 1800 Vevey (CH)
(72) Inventor: DUBIEF, Flavien, 1424 Champagne (CH); PERRIN, Alexa, 1073 Savigny (CH)
(74) Representative: Ducreux, Marie
(86) International application number: PCT/EP2016/057658
(87) International publication number: WO 2016/169778

(56) References cited:
- WO-A1-2009/037493
- US-A1- 2005 095 341
- US-A1- 2013 014 857

## Description

### Field of the invention

The present invention relates to beverage dispensers dispensing beverages in a drinking container, the beverages visually presenting different stacked layers.

### Background of the invention

Layered beverage are known from the state of the art, especially in the field of coffee and milk beverages (e.g. latte macchiato) or in the field of alcoholic beverages like cocktails. Usually these beverages are prepared manually due to the difficulty of keeping the layers well separated.

EP-A1-1681969 has disclosed a method for dispensing a beverage with the visual appearance of multi-layers obtained from dilution of concentrates in proper dilution ratios. A first liquid layer is first delivered with a controlled density. A second liquid layer is diluted to a density that is lower than the density of the first liquid layer so that the first and second layers form a stable layered arrangement with the second liquid layer of lower density remaining spatially above the first liquid layer to provide a visually distinct layer as compared to the first liquid layer in the container. A perfect separation of the layers is not always possible due to the fact that the second top layer can mix with the first bottom layer. In an attempt to reduce this problem, in this prior art, it is proposed to produce foam at the top of the first layer in order to reduce the velocity of the component of the second layer when it is delivered and avoid the mixing with the first layer. Accordingly, the dispenser comprises a whipper at the outlet of the mixing chamber. Yet foam is not always desired by the customer, in particular for the preparation of cold layered beverages and especially for fruit or syrup layered beverages.

Moreover, the method disclosed in said prior art sticks to the preparation of know recipes, like cappuccino and does not envisage the possibility to create layered beverages with layers differently ordered from the current well known recipes. This prior art does not envisage the possibility to prepare a cappuccino with a milk-based layer above the coffee-based layer.

US 2013/0014857 has disclosed a dispenser and methods for filling a holder with separated liquid layers. One method consists in placing a liquid feed conduit next to the bottom of the holder and dispensing liquids therethrough in order of increasing density. Each successive liquid is formed under the previous liquid layer. In this method the density of the liquids is fixed and the liquid with a high density is always positioned at the bottom of the holder whereas a liquid with a low density is always positioned at the bottom of the holder. It is not possible to play indifferently with the position of a liquid in the final beverage.

An object of the invention is to address at least some of the drawbacks of said prior arts.

In particular, an object of the present invention is to provide a dispenser for preparing a layered beverage enabling the user to select the nature of the different layers (strawberry, peach, mango, ...) and, for each selected nature, the position of said layer in the drinking container.

### Summary of the invention

In a first aspect of the invention, there is provided a beverage dispenser configured for dispensing in a drinking container a beverage composed of a plurality of layers of beverage components, said dispenser comprising :
- a preparation unit for preparing the beverage components and dispensing said beverage components in a drinking container, said preparation unit preparing the beverage components by dilution of at least one soluble beverage ingredients with a diluent, preferably water,
- a control unit for enabling a user to control the preparation unit, said control unit comprising
   - a user interface for enabling a user to select a beverage,
   - a processing unit for driving the preparation unit in accordance with the beverage selected by the user,
wherein the user interface enables the user to choose the vertical order of the layers of beverage components in the drinking container, and
wherein the processing unit is adapted :
- to calculate the density of each beverage component in order to obtain the vertical order of layers selected by the user in the drinking container, and
- to drive the preparation unit in order to successively prepare and dispense in the drinking container each beverage component at the corresponding calculated density.

The dispenser is configured for dispensing beverages in a drinking container, preferably a transparent glass, in order to provide a visual effect. Actually the dispenser produces beverages visually composed of at least two layers of different beverage components, vertically stacked one onto the other.

According to one mode, the dispenser can prepare a beverage comprising at least two different beverage components differing by their densities and their natures. The two components are usually prepared from different soluble beverage ingredients. For example the dispenser can prepare a layered beverage comprising one bottom layer of strawberry syrup and one top layer of orange juice.

According to another mode, the dispenser can prepare a beverage comprising at least two different beverage components differing by their densities only. The two components can be prepared from the same soluble beverage ingredient. In this last mode, it is possible to prepare a layered beverage wherein the layers differ visually by the intensity of their colour (the colour being the same for ally layers) and by the intensity of their taste (the upper layer being the more diluted layer and the bottom layer being the less diluted layer).

The dispenser comprises a preparation unit for preparing the beverage components and dispensing said beverage components in a drinking container.

Generally the preparation unit prepares the beverage components by dissolution of at least one soluble beverage ingredient with a diluent, generally water.

Accordingly the dilution enables the control of the density of the beverage component.

Preferably the preparation unit is configured for filling the drinking container with the beverage components from the bottom of the drinking container, and the processing unit is adapted to successively prepare and dispense a lower density beverage component prior to a higher density beverage component.

The dispenser comprises a control unit for enabling a user to control the preparation unit.

In order to enable a user to select a beverage, the control unit comprises a user interface. The user interface enables the user to select the vertical order of the stacked layers of beverage components in the drinking container.

The control unit comprises a processing unit for driving the preparation unit in accordance with the nature and the vertical order of layers of beverage components such as selected by the user. In particular, the processing unit is adapted to calculate the density of each beverage component in order to obtain the vertical order of layers selected by the user in the drinking container. Then, based on the result of the calculation, the processing unit is adapted to drive the preparation unit in order to prepare and dispense in the drinking container each beverage component at the corresponding calculated density. The processing unit is adapted to drive the preparation unit in order to prepare and dispense in the drinking container each beverage component successively.

Preferably the user interface is a graphical user interface and during at least one step of the process of selection of the beverage :
- the graphical user interface provides :
   - an illustration of the drinking container, and
   - a list of a plurality of selectable beverage components, and
- the graphical user interface enables the user to position beverage components in the drinking container in the form of vertically stacked layers.

Accordingly the user can create layered beverages presenting the visual aspect he/she prefers. The user can also define the layers according to his/her taste, the layers enabling him/her to drink one layer after the other.

In one particular embodiment of the dispenser, the graphical user interface can provide an illustration of the drinking container with vertically stacked layers, and the graphical user interface can enable the user to position the beverage components in the vertically stacked layers of the illustration.

In that embodiment, the vertically stacked layers can be represented in the container with lines or dotted lines. Accordingly this embodiment helps the user to position the beverage component layers in the illustration of the drinking container. This provides a suggestion for the highest possible number of layers in the drinking container, for example three.

In another particular embodiment of the dispenser, the graphical user interface can provide an illustration of the drinking container with a plurality of vertically stacked layers of predefined beverage components, and the graphical user interface can enable the user to change the order of the layers of the predefined beverage components in the illustration of the drinking container.

Accordingly this user interface proposes the user to change the order of the layers of predefined beverage components of a predefined beverage. The user can order a beverage with a taste he/she is used too and simultaneously play with the position of the layers of predefined beverage components.

Preferably the graphical user interface comprises a touch screen.

When the graphical user interface comprises a touch screen, the graphical user interface can enable the user to drag and drop a selected beverage component to the illustration of the drinking container.

According to the preferred embodiment, the preparation unit comprises :
- at least one container for storing a soluble beverage ingredient,
- a device for dosing a dose of soluble beverage ingredient from the at least one container for storing a soluble beverage ingredient,
- a supply of diluent, preferably water,
- at least one chamber for dissolving the dose of soluble beverage ingredient with the diluent, said chamber comprising a beverage outlet for dispensing the dissolved beverage ingredient,
- a dispensing area for supporting the drinking container,
and the dispenser is configured for filling the drinking container with the dissolved beverage ingredient from the bottom of the drinking container.

The dispenser comprises at least one container for storing a soluble beverage ingredient. The different stacked layers of beverage components are produced from said soluble beverage ingredients.

The soluble beverage ingredients can be soluble powders or concentrates like syrups or concentrated fruit or vegetable juices, or purees.

The container is a multi-portion container from which a portion of soluble beverage ingredient is dosed for each beverage preparation.

The dispenser comprises at least one device for dosing a dose of soluble beverage ingredient from the at least one container.

For a powder, the container usually comprises a tank and a powder outlet. Usually the powder outlet is positioned at the bottom of the tank. The dosing device is preferably a rotatable volumetric dosing member. The dosing device can be comprised in the list of a dosing screw, a dosing auger or perforated discs. Depending on the type of container for storing the soluble beverage powder, the dosing device can be integrated inside said container or provided at the outlet of said container. According to the preferred embodiment the dosing device is placed inside the container and positioned at the bottom of the container. It is preferably a dosing screw. Such a screw displaces a volume of powder from the container to the powder outlet. This sub-assembly composed of the container and the dosing device is usually identified as a canister in current beverage dispensers.

For a concentrate, the container can be a bag-in-box comprising a flexible tube for cooperating with a peristaltic dosing pump or a bottle.

The dispenser comprises at least one chamber for dissolving a dose of soluble beverage ingredient with diluent to produce a beverage component.

Generally this chamber comprises an opening for introducing the soluble powder or the concentrate, at least one diluent inlet and a beverage component outlet. The chamber is usually designed so as to make an efficient contact of the soluble powder or the concentrate with the diluent and to enable the dissolution of the powder or concentrate to produce the beverage component.

Usually the mixing chamber is positioned under the outlet of the soluble beverage ingredient container so that the powder or the concentrate can be delivered in the chamber by gravity fall.

The chamber can comprise a rotating whipper activated by a motor to improve the dissolution or the chamber can be whipperless.

According to one embodiment, the chamber can comprise an opening for introducing the soluble beverage ingredient and at least one diluent inlet configured for introducing the diluent in the form of a jet inside the chamber and the chamber is configured so that a whirlpool of liquid is created in the chamber and the jet of diluent entering the chamber hits said whirlpool as long as diluent is introduced in the chamber. A dissolution chamber working according to this principle is described for example in WO 2008/071613.

According to another embodiment, the chamber can comprise a tube designed for improving mixing of diluent and beverage ingredient, preferably a concentrate, like the mixing tube described in WO 2010/115888.

The dispenser comprises a supply of diluent that is generally water, hot, ambient and/or cold water. According to the preferred embodiment the supply of water is cold water.

According to one embodiment the dispenser can comprise only one chamber for the preparation of the all the beverage components (since the preparation is made in successive steps for each beverage component).

According to the preferred embodiment, the dispenser comprises :
- a plurality of containers for storing different soluble beverage ingredients,
- a plurality of devices for dosing a dose of soluble beverage ingredient, each of said dosing devices cooperating with one dedicated container for storing a soluble beverage ingredient,
- a plurality of chambers for dissolving the dose of soluble beverage ingredient with diluent, each of said chambers cooperating with one dedicated container storing a soluble beverage ingredient.

Such a dispenser enables the preparation of beverage components different in terms of natures and densities and offering the possibility of creation of an important variety of layered beverages.

As each of the chambers cooperates with one dedicated container storing a soluble beverage ingredient, the risk of cross-contamination is limited, which is of paramount importance for the preparation of beverages with layered of different colours.

The dispenser comprises a dispensing area for positioning the drinking container, the beverage components being dispensed in said drinking container. Once a drinking container is positioned in said area, the dispenser is configured for filling the drinking container with the beverage component from the bottom of the container.

Preferably the dispenser comprises a delivering device or is configured for receiving a delivering device for taking the beverage component from the beverage outlet of the at least one chamber, guiding said beverage component through the drinking container and delivering said beverage component at the bottom of the drinking container.

The delivering device guides the beverage components through the internal space of the drinking container down to the bottom of the drinking container and delivers the beverage components at the bottom of the drinking container only. Consequently the drinking container is filled from the bottom.

The delivering device can be configured to be removable from the dispenser, and optionally disposable.

Preferably the delivering device comprises at least one tube connected directly or indirectly to the beverage outlet of the at least one chamber

Preferably the bottom end of the tube does not touch the bottom of the drinking container so that the delivery of the beverage component is not obstructed.

The delivering device can comprise several tubes each of them cooperating with a chamber outlet or can comprise only one tube cooperating with the different chambers outlets.

Preferably the dispenser comprises a device for identifying the soluble beverage ingredient stored in the at least one container and the controller is configured for setting the dilution ratio in the chambers to get a desired density of the beverage component based on the identification of the soluble beverage ingredient.

The identification of the soluble beverage ingredient preferably relates to the physical nature (powder or liquid, syrup or puree) and, if a liquid, the density of the soluble beverage ingredient.

The device for identifying the soluble beverage ingredient can be a machine readable code reader, a bar code reader, a RFID reader, a reflected light frequency reader, an optical reader, a mechanical code reader.

According to a second aspect, there is provided a method for preparing and dispensing in a drinking container a beverage visually composed of a plurality of stacked layers of beverage components, said method comprising the steps of :
- enabling a user to choose the vertical order of the stacked layers of beverage components in the drinking container, and
- calculating the density of each beverage component in order to obtain the order of layers selected by the user in the drinking container,
- successively preparing and delivering in the drinking container the layers of beverage components by dilution of at least one soluble beverage ingredient in order to reach the calculated required density for the beverage component.

According to one mode, the method can enable the user to associate a selected beverage component taken from a list of beverage components with one specific layer of the plurality of layers in a represented drinking container. The association can be made through drag and drop movements.

According to another mode, the method can enable the user to change the order of layers of predefined beverage components in a represented drinking container. With this mode, it is possible to present to the user a predefined and known recipe, and to propose him/her to change the vertical order of the layers of predefined beverage components in the dinking container.

Preferably the density of each beverage component is calculated based on the definition of its position relative to the other layer(s) according to the choice of the user.

According to the preferred embodiment the layers of beverage components are delivered in the drinking container by filling the drinking container with the beverage component from the bottom of the drinking container.

Preferably the layers of beverage components are successively prepared, the order of the successive preparations consisting in preparing a lower density layer prior to a higher density layer.

Finally the controller controls the successive preparations and deliveries of the layers of beverage components by dilution of at least one of the soluble beverage ingredient. The preparation consists in diluting a soluble beverage ingredient with the diluent in a ratio soluble beverage ingredient/diluent such that the calculated required density is obtained. The order of preparation of each layer is controlled in order to deliver in the drinking container a lower density layer prior to a higher density layer.

Accordingly each new layer having a density higher than the precedent layer can push up the precedent layer of lower density when it is delivered by the delivery device at the bottom of the drinking container.

Preferably each beverage component presents a density differing by at least 5 % from the density of the beverage component composing one next layer.

Preferably the quantities of soluble ingredients and the sum of the volumes of diluent used to dilute said soluble ingredient to prepare the beverage components are set such that the final beverage, once mixed by the consumer, presents a pleasant taste and flavour.

Preferably the method is implemented with a dispenser such as described above.

In this text:
- the term "soluble beverage ingredient" means powder or liquid concentrate, that is dissolved or diluted for preparing a beverage,
- the term "soluble" means water soluble,
- the term " beverage component" means a component obtained by dilution of a soluble beverage ingredient, presenting an homogenised density, and used for forming one layer of a final layered beverage,
- the term " beverage" means the final beverage that has been prepared by delivering different beverage components of different densities and issued from the dilution of soluble beverage concentrate(s) in a drinking container.
- the term "dissolution" is interpreted as the reconstitution of a beverage component with diluent starting from a soluble beverage ingredient and as a dilution too.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a representation of a layered beverage susceptible to be dispensed by a dispenser according to the present invention,
- Figure 2 illustrates the user interface of a dispenser according to the present invention during the different steps of preparation of layered beverage,
- Figure 3 illustrates the process of preparation of a layered beverage with a dispenser according to the present invention.
- Figure 4 is a schematic representation of one first embodiment of a dispenser according to the present invention,
- Figure 5 is a schematic representation of one second embodiment of a dispenser according to the present invention,
- Figure 6 illustrates the steps of filling of the drinking container according to the process of the present invention.

### Detailed description of the drawings

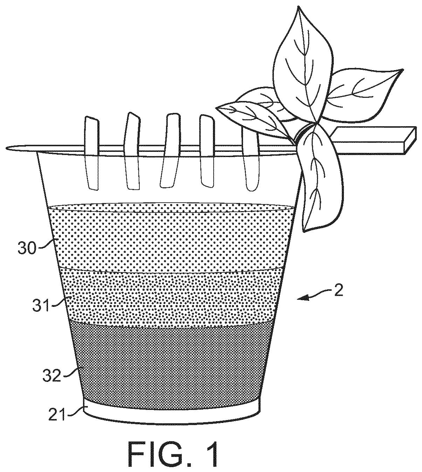

**Figure 1** illustrates a multi-layered beverage in a drinking container 2 susceptible to be obtained by a dispenser according to the present invention. Preferably the drinking container 2 is transparent so that the consumer can see the visual effect of having several stacked layers, here three layers, of different visual aspects.

The beverage in the drinking container 2 is composed of three different beverage components 30, 31, 32. The beverage components 30, 31, 32 differ by their densities. The densities of the beverage components decrease progressively from the bottom layer at the bottom 31 of the container to the top layer (d₃₀ < d₃₁ < d₃₂). They can also differ by their colours and/or their natures (syrups, purees, juices).

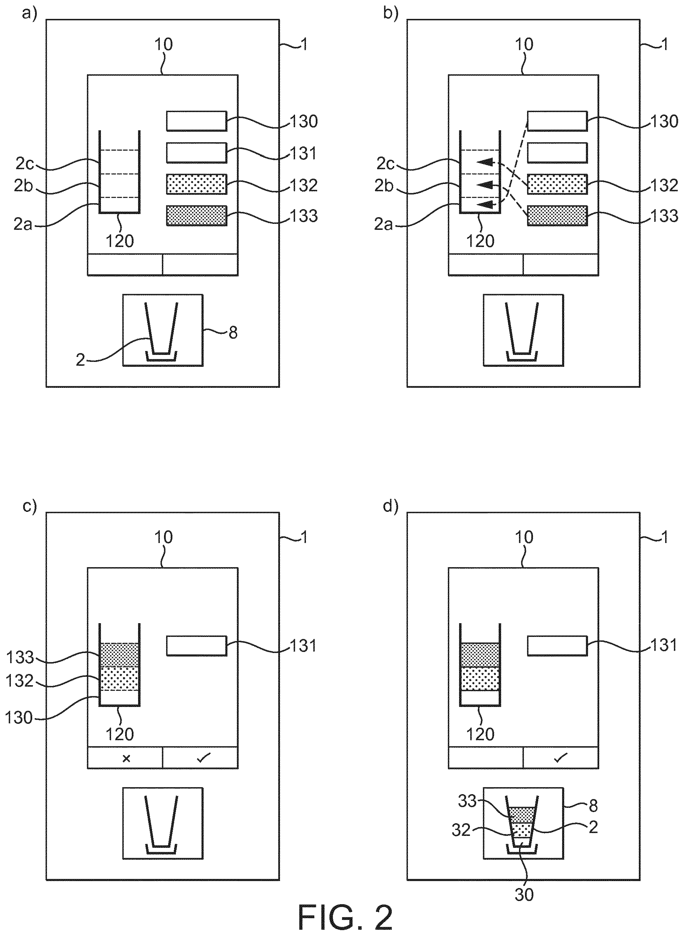

**Figure 2** illustrates the user interface 10 of a dispenser 1 according to the present invention during the different steps a) to d) of ordering of a layered beverage. The dispenser comprises a dispensing area 8 in which a user can position a drinking container 2, preferably a transparent container. As illustrated in step a) the dispenser comprises a user interface 10 providing :
- an illustration 120 of a drinking container with a plurality of vertically stacked layers 2a, 2b, 2c separated by dotted lines, and
- a list of a plurality of selectable beverage components 130, 131, 132, 133.

In step b) the user interface 10 enables the user to select the beverage components he/she desires in the beverage and the position of each component in the layers of the drinking container, for example the beverage component 130 in the bottom layer 2a, the beverage component 133 in the middle layer 2b and the beverage component 132 in the upper layer 2c. Depending on the nature of the user interface, this step can be realised by dragging and dropping the labels of the selectable beverage components in the desired layer of the drinking container.

In step c), at the end of the selection, the user interface 10 can provide an illustration of the layered beverage as defined by the user in the illustrated drinking container 120. The user can accept or refuse the preparation of the defined beverage through selecting buttons at the bottom of the user interface.

Once the beverage selection is validated, the beverage is prepared in step d) and dispensed with the layers as defined by the user in the drinking container 2 at the dispensing area 8.

According to variants the user interface can provide :
- an illustration of the drinking container without the dotted lines and the plurality of vertically stacked layers, and
- a list of a plurality of selectable beverage components that he/she can position in the drinking container in the form of stacked layers.

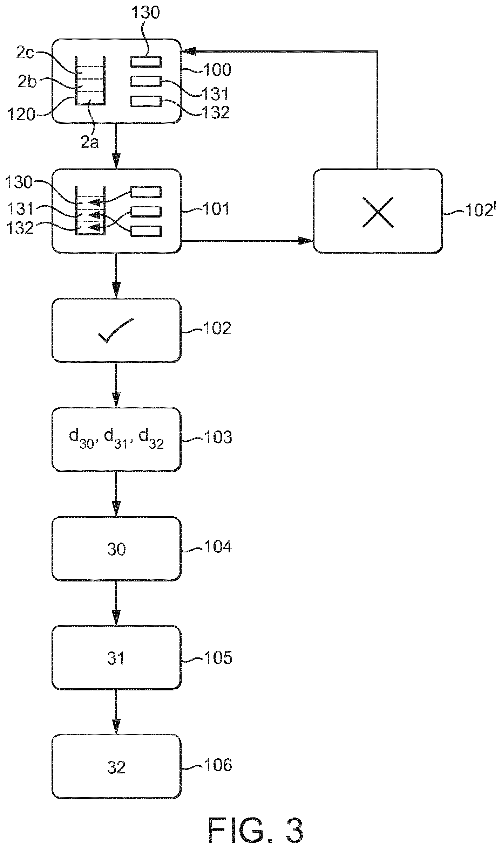

**Figure 3** illustrates the steps of preparation of a multi layered beverage implemented by the control unit of the dispenser configured for enabling a user to control the preparation unit of the dispenser.

In step 100, the user interface 10 of the dispenser presents to the user a representation 120 of the drinking container and a list 130, 131, 132 of selectable beverage components that can be introduced in the drinking container in the form of vertical layers 2a, 2b, 2c.

In step 101 the user is able to select the order of the beverage components 130, 131, 132 in the layers 2a, 2b, 2c in the drinking container 120.

In step 102, the user validates his/her selection. Or in an alternative step 102', the user can refuse the selection and return to step 100 for another choice.

In step 103, based on the selection made in step 102 and illustrated in step 101, the controller 9 calculates the required density d₃₀, d₃₁, d₃₂ of each layer of beverage component 30, 31, 32 respectively so that:
- the beverage component 32 in the layer at the bottom of the container presents a higher density than both other beverage components 30, 31,
- the beverage component 30 in the layer at the top of the container presents a lower density than both other beverage components 31, 32,
- the beverage component 31 in the layer in the middle of the container presents a density lower than beverage component 32 and higher than beverage component 30.

In following steps the control unit of the dispenser controls successively the preparation and delivery of the layers of beverage components by dilution of at least one soluble beverage ingredient in order to reach the calculated required density d₃₀, d₃₁, d₃₂, the order of preparation and delivery consisting in preparing and delivering in the drinking container a lower density layer prior to a higher density layer.

Accordingly :
- in step 104, the controller launches the preparation of the beverage component 30 presenting the lower density so that it is the first delivered at the bottom of the drinking container.
- then, in step 105, the controller launches the preparation of the beverage component 31 presenting a higher density than the first beverage component and so that it is delivered at the bottom of the drinking container.
- then, in step 106, the controller launches the preparation of the beverage component 32 presenting the highest density and so that it is delivered at the bottom of the drinking container.

Once the density of each beverage component has been defined, each beverage component is prepared and delivered in the drinking container starting from the beverage component presenting the lower density and progressively preparing and delivering other beverage components, a lower density component being always prepared and dispensed prior to a higher density component.

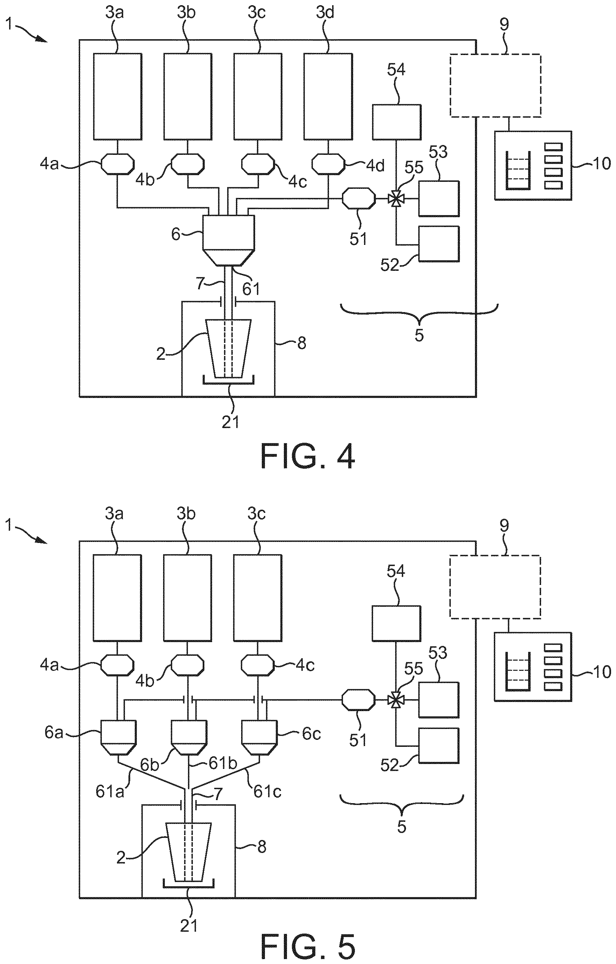

**Figure 4** illustrates one first embodiment of a dispenser 1 according to the invention.

The dispenser comprises several containers 3a, 3b, 3c, 3d for storing different soluble beverage ingredients. These ingredients can be soluble beverage powders like instant coffee, tea powder, chocolate powder, milk power, fruit or vegetable powders. These ingredients can be concentrates like coffee, tea, chocolate, milk concentrates, syrups. These ingredients can be fruit or vegetable purees.

The dispenser 1 comprises devices 4a, 4b, 4c, 4d for dosing a dose of soluble beverage ingredient from the containers 3a, 3b, 3c, 3d respectively. Each dosing device is dedicated to one container.

If the soluble beverage ingredient is a powder, the container usually comprises a tank and a powder outlet. Usually the powder outlet is positioned at the bottom of the tank. The dosing device is preferably a rotatable volumetric dosing member. The dosing device can be comprised in the list of a dosing screw, a dosing auger or perforated discs. Depending on the type of container for storing the powder, the dosing device can be integrated inside said container or provided at the outlet of said container. According to the preferred embodiment the dosing device is placed inside the container and positioned at the bottom of the container. It is preferably a dosing screw. Such a screw displaces a volume of powder from the container to the powder outlet. This sub-assembly composed of the container and the dosing device is usually identified as a canister in current beverage dispensers.

If the soluble beverage ingredient is a liquid, the container can be a bag-in-box with a flexible tube attached to the outlet, said tube cooperating with a peristaltic pump as a dosing device. The container can also be a bottle with a dispensing and dosing cap.

The dispenser comprises a supply of water 5. This supply usually comprises a pump 51 pumping either hot water, ambient water or cold water from corresponding sources 52, 53, 54 by activation of a selection valve 55.

The dispenser comprises a chamber 6 for mixing and dissolving at least one dose of soluble beverage ingredient with a dose of diluent to produce a beverage component. Usually the chamber is positioned under the containers so that the powder or the concentrate can be delivered in the chamber by gravity fall.

The chamber can be fed with only one soluble beverage ingredient or with doses of different soluble beverage ingredients to produce one beverage component, for example peach and mango purees to produce a mango peach diluted puree.

The chamber 6 comprises a beverage outlet 61for dispensing the beverage component prepared in the chamber 6.

The dispenser comprises a dispensing area 8 in which the user can position the drinking container 2 so that the beverage components can be dispensed from the chamber in the container.

The dispenser comprises a delivering device 7 for taking the beverage component prepared in the chamber 6 and dispensed from the beverage outlet 61 of the chamber and for guiding said beverage component through the drinking container 2 and for delivering said beverage component at the bottom 21 of the drinking container.

Accordingly each beverage component prepared in the chamber 6 fills the drinking container 2 from its bottom 21.

**Figure 5** illustrates another embodiment of a dispenser according to the invention. This dispenser 1 presents the same features as the dispenser of Figure 4 except that it comprises three chambers 6a, 6b, 6c for mixing and dissolving a dose of soluble beverage ingredient with a dose of diluent. Each chamber 6a, 6b, 6c cooperates with one dedicated container 3a, 3b, 3c respectively for storing a soluble beverage ingredient. Accordingly each chamber is dedicated to the dissolution of one type of soluble ingredient only. This configuration is recommended when the soluble beverage ingredients stored in containers 3a, 3b, 3c present such different natures that they cannot be dissolved with the same chamber, such as for example a soluble powder and a concentrate. The chamber for dissolving powder is generally a dissolution chamber wherein powder is impacted by jets and/or swirled by diluent. The chamber for dissolving a concentrate can be a simple tube or mixing nozzle.

This configuration with several dedicated chambers can present the advantage of limiting cross contamination of one beverage component by another beverage component too.

The beverage outlets 61a, 61b, 61c of the chambers cooperate with a delivering device 7 for taking the beverage component prepared in each chamber, for dispensing this beverage component from the beverage outlet and for guiding said beverage component through the drinking container 2 and for delivering said beverage component at the bottom 21 of the drinking container.

In an alternative the dispenser can comprise several delivering devices 7 and each beverage outlet 61a, 61b, 61c can cooperate with a dedicated delivering device.

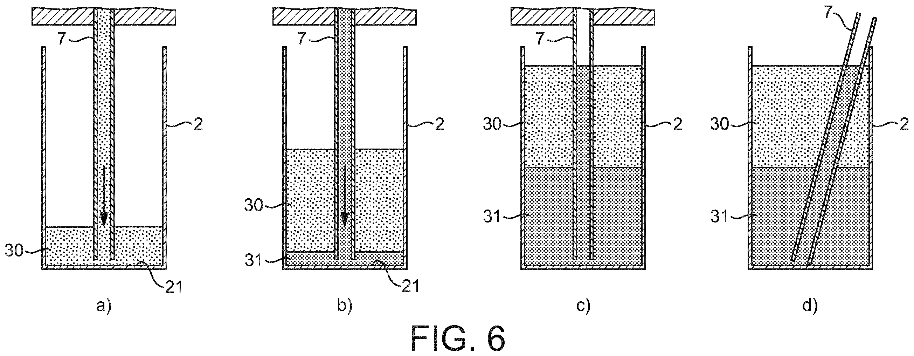

Whatever the dispenser, the preferred way for filling of the drinking container 2 is illustrated in **Figure 6** for the preparation of a two layer beverage comprising two beverage components 30, 31 presenting different densities. In step a), the first beverage component 30 is prepared and dispensed in the container 2 through the delivering device 7. This device 7 is a simple tube positioned between the discharge outlet 61 of the chamber and the bottom 21 of the drinking container. The bottom outlet of the tube 7 is preferably positioned near the bottom surface of the container so as to avoid any blockage.

In step b), the second beverage component 31 is prepared and dispensed in the container 2 through the delivering device 7. The second beverage component 31 presents a greater density than the second beverage component 30 and consequently, when it fills the container 20 by the bottom, it simultaneously pushes the first beverage component 30 up without mixing with it.

In step c), the preparation of the beverage is finished.

In step d), the delivering device 7 can be detached from the dispenser and be used as disposable agitator or straw.

Each dispenser 1 of Figures 4 and 5 comprises a control unit 9 configured for:
- actuating the dosing devices 4a, 4b, 4c, 4d in order to dispense a particular dose of soluble beverage ingredient in a chamber 6, 6a, 6b, 6c,
- actuating the diluent supply 5 in order to dispense a particular dose of cold, ambient or hot water in a chamber 6, 6a, 6b, 6c,
- eventually actuating the motor of a whipper device within at least one of the chambers 6, 6a, 6b, 6c.

Each dispenser 1 of Figures 4 and 5 comprises a user interface 10, such as illustrated in Figure 2, operable to receive a beverage recipe selection, the selection including the step of defining the relative position of the at least two different layers of beverage component in the drinking container. Accordingly the consumer is able to define the vertical order of the beverage components in the drinking container.

The dispenser and the method of the present invention present the advantage of enabling customers to prepare layered beverages based on an order of the layers defined by the customers themselves.

The dispenser and the method of the present invention present the advantage of enabling customers to prepare layered beverages different from the well-known recipes for layered beverages.

The dispenser and the method of the present invention present the advantage of enabling customers to prepare layered beverages without the systematic presence of foam at the top of the beverage.

The user interface of the dispenser of the present invention presents the advantage of enabling the customers to select the order of the layers of beverage components in a simple and intuitive manner.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| dispenser | 1 |
| drinking container | 2 |
| bottom | 21 |
| soluble ingredient container | 3a, 3b, 3c, 3d |
| dosing device | 4a, 4b, 4c, 4d |
| diluent supply | 5 |
| pump | 51 |
| hot water supply | 52 |
| cold water supply | 53 |
| ambient water supply | 54 |
| valve | 55 |
| dissolution chamber | 6, 6a, 6b, 6c |
| beverage outlet | 61, 61a, 61b, 61c |
| delivering device | 7 |
| dispensing area | 8 |
| control unit | 9 |
| user interface | 10 |
| beverage component | 30, 31, 32, 33 |
| illustration of drinking container | 120 |
| layers | 2a, 2b, 2c |
| selectable beverage components | 130, 131, 132, 133 |

## Claims

1. Beverage dispenser (1) configured for dispensing in a drinking container (2) a beverage composed of a plurality of layers (2a, 2b, 2c) of beverage components, said dispenser comprising :
- a preparation unit for preparing the beverage components (30, 31, 32, 33) and dispensing said beverage components in a drinking container, said preparation unit preparing the beverage components by dilution of at least one soluble beverage ingredients with a diluent, preferably water,
- a control unit (9) for enabling a user to control the preparation unit, said control unit comprising :
• a user interface (10) for enabling a user to select a beverage,
• a processing unit for driving the preparation unit in accordance with the beverage selected by the user,
wherein the user interface (10) enables the user to choose the vertical order of the layers (2a, 2b, 2c) of beverage components in the drinking container, and
wherein the processing unit is adapted :
• to calculate the density (d₃₀, d₃₁, d₃₂, d₃₃) of each beverage component in order to obtain the vertical order of layers selected by the user in the drinking container, and
• to drive the preparation unit in order to successively prepare and dispense in the drinking container (2) each beverage component (30, 31, 32, 33) at the corresponding calculated density (d₃₀, d₃₁, d₃₂, d₃₃).

2. Beverage dispenser according to Claim 1, wherein :
- the preparation unit is configured for filling the drinking container (2) with the beverage components (30, 31, 32, 33) from the bottom (21) of the drinking container, and
- the processing unit is adapted to successively prepare and dispense a lower density beverage component prior to a higher density beverage component.

3. Beverage dispenser according to Claim 1 or 2 wherein the user interface is a graphical user interface and during at least one step of the process of selection of the beverage :
- the graphical user interface (10) provides :
• an illustration (120) of the drinking container, and
• a list of a plurality of selectable beverage components (130, 131, 132, 133), and
- the graphical user interface (10) enables the user to position beverage components in the drinking container in the form of vertically stacked layers (2a, 2b, 2c).

4. Beverage dispenser according to the precedent claim wherein during the at least one step of the selection of the beverage :
- the graphical user interface (10) provides an illustration (120) of the drinking container with vertically stacked layers (2a, 2b, 2c), and
- the graphical user interface (10) enables the user to position beverage components in the vertically stacked layers (2a, 2b, 2c) of the illustration (120).

5. Beverage dispenser according to Claim 1 or 2 wherein the user interface is a graphical user interface (10) and during at least one step of the process of selection of the beverage :
- the graphical user interface provides an illustration (120) of the drinking container with a plurality of vertically stacked layers of predefined beverage components, and
- the graphical user interface enables the user to change the order of the layers of the predefined beverage components in the illustration (120) of the drinking container.

6. Beverage dispenser according to any one of the precedent claims, wherein the graphical user interface (10) comprises a touch screen.

7. Beverage dispenser according to any one of Claims 3 to 6, wherein the graphical user interface enables the user to drag and drop a selected beverage component (30, 31, 32, 33) to the illustration (120) of the drinking container.

8. Beverage dispenser according to any one of the precedent claims, wherein the preparation unit comprises :
- at least one container (3a, 3b, 3c, 3d) for storing a soluble beverage ingredient,
- a device (4a, 4b, 4c, 4d) for dosing a dose of soluble beverage ingredient from the at least one container for storing a soluble beverage ingredient,
- a supply of diluent (5), preferably water,
- at least one chamber (6, 6a, 6b, 6c) for dissolving the dose of soluble beverage ingredient with the diluent, said chamber comprising a beverage outlet (61) for dispensing the dissolved beverage ingredient,
- a dispensing area (8) for supporting the drinking container,
wherein the dispenser is configured for filling the drinking container (2) with the dissolved beverage ingredient from the bottom (21) of the drinking container.

9. Beverage dispenser according to the precedent claim, wherein it comprises :
- a plurality of containers (3a, 3b, 3c) for storing a soluble beverage ingredient,
- a plurality of devices (4a, 4b, 4c) for dosing a dose of soluble beverage ingredient, each of said dosing device cooperating with one dedicated container for storing a soluble beverage ingredient,
- a plurality of chambers (6a, 6b, 6c) for dissolving a dose of soluble beverage ingredient with the diluent, each of said chamber cooperating with one dedicated container dosing device and one dedicated container for storing a soluble beverage ingredient.

10. Beverage dispenser according to Claim 8 or 9, wherein the dispenser comprises a delivering device (7) or is configured for receiving a delivering device (7) for taking the dissolved beverage ingredient from the beverage outlet (61, 61a, 61b, 61c) of the at least one chamber, guiding said dissolved beverage ingredient through the drinking container (2) and delivering said dissolved beverage ingredient at the bottom (21) of the drinking container.

11. Beverage dispenser according to the precedent claim, wherein the delivering device (7) comprises a tube.

12. Method for preparing and dispensing in a drinking container (2) a beverage visually composed of a plurality of stacked layers of beverage components, said method comprising the steps of :
- enabling a user to choose the vertical order of the layers (2a, 2b, 2c) of beverage components (130, 131, 132, 133) in the drinking container (2), and
- calculating the density (d₃₀, d₃₁, d₃₂, d₃₃) of each beverage component in order to obtain the order of layers selected by the user in the drinking container,
- successively preparing and delivering in the drinking container each layer of beverage component by dilution of at least one soluble beverage ingredient in order to reach the calculated required density for the beverage component.

13. Method according to Claim 12, wherein each layer of beverage component is delivered in the drinking container by filling the drinking container from the bottom of the drinking container, and
the order of preparation and delivery of the layers of beverage component consists in preparing a lower density layer prior to a higher density layer.

14. Method according to Claim 12 or 13, wherein it is implemented with the dispenser of any of Claims 1 to 11.

## Patentansprüche

1. Getränkespender (1), der dazu konfiguriert ist, in einem Trinkbehälter (2) ein Getränk, das sich aus einer Vielzahl von Schichten (2a, 2b, 2c) von Getränkekomponenten zusammensetzt, abzugeben, wobei der Spender umfasst:
- eine Zubereitungseinheit zum Zubereiten der Getränkekomponenten (30, 31, 32, 33) und zum Abgeben der Getränkekomponenten in einem Trinkbehälter, wobei die Zubereitungseinheit die Getränkekomponenten durch Verdünnen von mindestens einem löslichen Getränkeinhaltsstoff mit einem Verdünnungsmittel, vorzugsweise Wasser, zubereitet,
- eine Steuereinheit (9), um es einem Benutzer zu ermöglichen, die Zubereitungseinheit zu steuern, wobei die Steuereinheit umfasst:
• eine Benutzeroberfläche (10), um es einem Benutzer zu ermöglichen, ein Getränk auszuwählen,
• eine Verarbeitungseinheit zum Ansteuern der Zubereitungseinheit gemäß dem vom Benutzer ausgewählten Getränk,
wobei die Benutzeroberfläche (10) es dem Benutzer ermöglicht, die vertikale Reihenfolge der Schichten (2a, 2b, 2c) von Getränkekomponenten in dem Trinkbehälter auszuwählen, und
wobei die Verarbeitungseinheit dazu angepasst ist:
• die Dichte (d₃₀, d₃₁, d₃₂, d₃₃) jeder Getränkekomponente zu berechnen, um die vertikale Reihenfolge der vom Benutzer im Trinkbehälter ausgewählten Schichten zu erhalten, und
• die Zubereitungseinheit anzusteuern, um nacheinander jede Getränkekomponente (30, 31, 32, 33) mit der entsprechenden berechneten Dichte (d₃₀, d₃₁, d₃₂, d₃₃) zuzubereiten und in den Trinkbehälter (2) abzugeben.

2. Getränkespender nach Anspruch 1, wobei:
- die Zubereitungseinheit dazu konfiguriert ist, den Trinkbehälter (2) vom Boden (21) des Trinkbehälters aus mit den Getränkekomponenten (30, 31, 32, 33) zu füllen, und
- die Verarbeitungseinheit dazu angepasst ist, nacheinander eine Getränkekomponente mit niedrigerer Dichte vor einer Getränkekomponente mit höherer Dichte zuzubereiten und abzugeben.

3. Getränkespender nach Anspruch 1 oder 2, wobei die Benutzeroberfläche eine grafische Benutzeroberfläche ist und während mindestens eines Schrittes des Getränkeauswahlprozesses:
- die grafische Benutzeroberfläche (10) bereitstellt:
• eine Darstellung (120) des Trinkbehälters, und
• eine Liste einer Vielzahl von wählbaren Getränkekomponenten (130, 131, 132, 133),
und
- die grafische Benutzeroberfläche (10) es dem Benutzer ermöglicht, Getränkekomponenten in dem Trinkbehälter in Form von vertikal gestapelten Schichten (2a, 2b, 2c) zu positionieren.

4. Getränkespender nach dem vorhergehenden Anspruch, wobei während des mindestens einen Schrittes der Getränkeauswahl:
- die grafische Benutzeroberfläche (10) eine Darstellung (120) des Trinkbehälters mit vertikal gestapelten Schichten (2a, 2b, 2c) bereitstellt, und
- die grafische Benutzeroberfläche (10) es dem Benutzer ermöglicht, Getränkekomponenten in den vertikal gestapelten Schichten (2a, 2b, 2c) der Darstellung (120) zu positionieren.

5. Getränkespender nach Anspruch 1 oder 2, wobei die Benutzeroberfläche eine grafische Benutzeroberfläche (10) ist, und während mindestens eines Schrittes des Getränkeauswahlprozesses:
- die grafische Benutzeroberfläche eine Darstellung (120) des Trinkbehälters mit einer Vielzahl von vertikal gestapelten Schichten von vordefinierten Getränkekomponenten bereitstellt, und
- die grafische Benutzeroberfläche es dem Benutzer ermöglicht, die Reihenfolge der Schichten der vordefinierten Getränkekomponenten in der Darstellung (120) des Trinkbehälters zu ändern.

6. Getränkespender nach einem der vorstehenden Ansprüche, wobei die grafische Benutzeroberfläche (10) einen Touchscreen umfasst.

7. Getränkespender nach einem der Ansprüche 3 bis 6, wobei die grafische Benutzeroberfläche es dem Benutzer ermöglicht, eine ausgewählte Getränkekomponente (30, 31, 32, 33) durch Ziehen und Verschieben in die Darstellung (120) des Trinkbehälters zu bewegen.

8. Getränkespender nach einem der vorstehenden Ansprüche, wobei die Zubereitungseinheit Folgendes umfasst:
- mindestens einen Behälter (3a, 3b, 3c, 3d) zum Lagern eines löslichen Getränkeinhaltsstoffes,
- eine Vorrichtung (4a, 4b, 4c, 4d) zum Dosieren einer Dosis eines löslichen Getränkeinhaltsstoffes aus dem mindestens einen Behälter zum Lagern eines löslichen Getränkeinhaltsstoffes,
- einen Vorrat von Verdünnungsmittel (5), vorzugsweise Wasser,
- mindestens eine Kammer (6, 6a, 6b, 6c) zum Lösen der Dosis des löslichen Getränkeinhaltsstoffes mit dem Verdünnungsmittel, wobei die Kammer einen Getränkeauslass (61) zum Abgeben des gelösten Getränkeinhaltsstoffes umfasst,
- einen Abgabebereich (8) zum Aufnehmen des Trinkbehälters,
wobei der Spender dazu konfiguriert ist, den Trinkbehälter (2) vom Boden (21) des Trinkbehälters aus mit den gelösten Getränkeinhaltsstoffen (30, 31, 32, 33) zu füllen.

9. Getränkespender nach dem vorhergehenden Anspruch, Folgendes umfassend:
- eine Vielzahl von Behältern (3a, 3b, 3c, 3d) zum Lagern eines löslichen Getränkeinhaltsstoffes,
- eine Vielzahl von Vorrichtungen (4a, 4b, 4c, 4d) zum Dosieren einer Dosis eines löslichen Getränkeinhaltsstoffes, wobei jede der Dosiervorrichtungen mit einem spezifischen Behälter zum Lagern eines löslichen Getränkeinhaltsstoffes zusammenwirkt,
- eine Vielzahl von Kammern (6a, 6b, 6c) zum Lösen einer Dosis eines löslichen Getränkeinhaltsstoffes mit dem Verdünnungsmittel, wobei jede der Kammern mit einer speziellen Behälterdosiervorrichtung und einem speziellen Behälter zum Lagern eines löslichen Getränkeinhaltsstoffes zusammenwirkt.

10. Getränkespender nach Anspruch 8 oder 9, wobei der Spender eine Ausgabevorrichtung (7) umfasst oder dazu konfiguriert ist, eine Ausgabevorrichtung (7) zum Entnehmen des gelösten Getränkeinhaltsstoffes aus dem Getränkeauslass (61, 61a, 61b, 61c) der mindestens einen Kammer aufzunehmen, den gelösten Getränkeinhaltsstoff durch den Trinkbehälter (2) zu führen und den gelösten Getränkeinhaltsstoff am Boden (21) des Trinkbehälters auszugeben.

11. Getränkespender nach dem vorstehenden Anspruch, wobei die Ausgabeöffnung (7) ein Rohr umfasst.

12. Verfahren zum Zubereiten und zum Abgeben eines Getränks in einem Trinkbehälter (2), das optisch aus einer Vielzahl von gestapelten Schichten von Getränkekomponenten besteht, wobei das Verfahren die folgenden Schritte umfasst:
- Ermöglichen, dass ein Benutzer die vertikale Reihenfolge der Schichten (2a, 2b, 2c) von Getränkekomponenten (130, 131, 132, 133) im Trinkbehälter (2) wählen kann, und
- Berechnen der Dichte (d₃₀, d₃₁, d₃₂, d₃₃) jeder Getränkekomponente, um die Reihenfolge der vom Benutzer im Trinkbehälter ausgewählten Schichten zu erhalten, und
- sukzessives Zubereiten und Ausgeben jeder Schicht einer Getränkekomponente in dem Trinkbehälter durch Verdünnen mindestens eines löslichen Getränkeinhaltsstoffes, um die berechnete erforderliche Dichte für die Getränkekomponente zu erreichen.

13. Verfahren nach Anspruch 12, wobei jede Schicht einer Getränkekomponente in den Trinkbehälter ausgegeben wird, indem der Trinkbehälter vom Boden des Trinkbehälters aus gefüllt wird, und
die Reihenfolge der Zubereitung und Ausgabe der Schichten der Getränkekomponente darin besteht, eine Schicht mit niedrigerer Dichte vor einer Schicht mit höherer Dichte zuzubereiten.

14. Verfahren nach Anspruch 12 oder 13, wobei es mit dem Spender eines der Ansprüche 1 bis 11 implementiert wird.

## Revendications

1. Distributeur de boissons (1) configuré pour distribuer dans un récipient de boisson (2) une boisson composée d'une pluralité de couches (2a, 2b, 2c) de composants de boisson, ledit distributeur comprenant :
- une unité de préparation pour préparer les composants de boisson (30, 31, 32, 33) et distribuer lesdits composants de boisson dans un récipient de boisson, ladite unité de préparation produisant les composants de boisson par dilution d'au moins un ingrédient de boisson soluble avec un diluant, de préférence de l'eau,
- une unité de commande (9) pour permettre à un utilisateur de commander l'unité de préparation, ladite unité de commande comprenant :
• une interface utilisateur (10) pour permettre à un utilisateur de sélectionner une boisson,
• une unité de traitement pour entraîner l'unité de préparation en fonction de la boisson sélectionnée par l'utilisateur,
dans lequel l'interface utilisateur (10) permet à l'utilisateur de choisir l'ordre vertical des couches (2a, 2b, 2c) des composants de boisson dans le récipient de boisson et
dans lequel l'unité de traitement est conçue :
• pour calculer la densité (d₃₀, d₃₁, d₃₂, d₃₃) de chaque composant de boisson pour obtenir l'ordre vertical des couches choisi par l'utilisateur dans le récipient de boisson et
• pour entraîner l'unité de préparation pour successivement préparer et distribuer dans le récipient de boisson (2) chaque composant de boisson (30, 31, 32, 33) à la densité calculée correspondante (d₃₀, d₃₁, d₃₂, d₃₃).

2. Distributeur de boissons selon la revendication 1, dans lequel :
- l'unité de préparation est configurée pour remplir le récipient de boisson (2) avec les composants de boisson (30, 31, 32, 33) depuis le fond (21) du récipient de boisson et
- l'unité de traitement est conçue pour préparer et distribuer successivement un composant de boisson de densité inférieure avant un composant de boisson de densité supérieure.

3. Distributeur de boissons selon la revendication 1 ou 2, dans lequel l'interface utilisateur est une interface utilisateur graphique et pendant au moins une étape du processus de sélection de la boisson :
- l'interface utilisateur graphique (10) fournit :
• une représentation (120) du récipient de boisson et
• une liste d'une pluralité de composants de boisson pouvant être sélectionnés (130, 131, 132, 133),
et
- l'interface utilisateur graphique (10) permet à l'utilisateur de positionner des composants de boisson dans le récipient de boisson sous la forme de couches empilées verticalement (2a, 2b, 2c).

4. Distributeur de boissons selon la revendication précédente dans lequel, au cours de l'au moins une étape de sélection de la boisson :
- l'interface utilisateur graphique (10) fournit une représentation (120) du récipient de boisson avec des couches empilées verticalement (2a, 2b, 2c) et
- l'interface utilisateur graphique (10) permet à l'utilisateur de positionner des composants de boisson dans les couches empilées verticalement (2a, 2b, 2c) de la représentation (120).

5. Distributeur de boissons selon la revendication 1 ou 2, dans lequel l'interface utilisateur est une interface utilisateur graphique (10) et pendant au moins une étape du processus de sélection de la boisson :
- l'interface utilisateur graphique fournit une représentation (120) du récipient de boisson avec une pluralité de couches empilées verticalement de composants de boisson prédéfinis et
- l'interface utilisateur graphique permet à l'utilisateur de changer l'ordre des couches des composants de boisson prédéfinis dans la représentation (120) du récipient de boisson.

6. Distributeur de boissons selon l'une quelconque des revendications précédentes, dans lequel l'interface utilisateur graphique (10) comprend un écran tactile.

7. Distributeur de boissons selon l'une quelconque des revendications 3 à 6, dans lequel l'interface utilisateur graphique permet à l'utilisateur de glisser et déposer un composant de boisson sélectionné (30, 31, 32, 33) sur la représentation (120) du récipient de boisson.

8. Distributeur de boissons selon l'une quelconque des revendications précédentes, dans lequel l'unité de préparation comprend :
- au moins un récipient (3a, 3b, 3c, 3d) de stockage d'un ingrédient de boisson soluble,
- un dispositif (4a, 4b, 4c, 4d) pour doser une dose d'ingrédient de boisson soluble à partir l'au moins un récipient pour stocker un ingrédient de boisson soluble,
- une alimentation en diluant (5), de préférence de l'eau,
- au moins une chambre (6, 6a, 6b, 6c) pour dissoudre la dose d'ingrédient de boisson soluble avec le diluant, ladite chambre comprenant une sortie de boisson (61) pour distribuer l'ingrédient de boisson dissous,
- une zone de distribution (8) pour supporter le récipient de boisson,
dans lequel le distributeur est configuré pour remplir le récipient de boisson (2) avec l'ingrédient de boisson dissous depuis le fond (21) du récipient de boisson.

9. Distributeur de boissons selon la revendication précédente, comprenant :
- une pluralité de récipients (3a, 3b, 3c) pour stocker un ingrédient de boisson soluble,
- une pluralité de dispositifs (4a, 4b, 4c) pour doser une dose d'ingrédient de boisson soluble, chacun dudit dispositif de dosage coopérant avec un récipient dédié au stockage d'un ingrédient de boisson soluble,
- une pluralité de chambres (6a, 6b, 6c) pour dissoudre une dose d'ingrédient de boisson soluble avec le diluant, chacune de ladite chambre coopérant avec un dispositif de dosage de récipient dédié et un récipient dédié au stockage d'un ingrédient de boisson soluble.

10. Distributeur de boissons selon la revendication 8 ou 9, dans lequel le distributeur comprend un dispositif de délivrance (7) ou est configuré pour recevoir un dispositif de délivrance (7) pour prélever l'ingrédient de boisson dissous de la sortie de boisson (61, 61a, 61b, 61c) de l'au moins une chambre, guider ledit ingrédient de boisson dissous à travers le récipient de boisson (2) et délivrer ledit ingrédient de boisson dissous au fond (21) du récipient de boisson.

11. Distributeur de boissons selon la revendication précédente, dans lequel le dispositif de délivrance (7) comprend un tube.

12. Procédé de préparation et de distribution dans un récipient de boisson (2) d'une boisson constituée visuellement d'une pluralité de couches empilées de composants de boisson, ledit procédé comprenant les étapes consistant à :
- permettre à un utilisateur de choisir l'ordre vertical des couches (2a, 2b, 2c) de composants de boisson (130, 131, 132, 133) dans le récipient de boisson (2) et
- calculer la densité (d₃₀, d₃₁, d₃₂, d₃₃) de chaque composant de boisson pour obtenir l'ordre des couches choisi par l'utilisateur dans le récipient de boisson,
- préparer et délivrer successivement dans le récipient de boisson chaque couche de composant de boisson par dilution d'au moins un ingrédient de boisson soluble afin d'atteindre la densité requise calculée pour le composant de boisson.

13. Procédé selon la revendication 12, dans lequel chaque couche de composant de boisson est délivrée dans le récipient de boisson en remplissant le récipient de boisson depuis le fond du récipient de boisson et
l'ordre de préparation et de délivrance des couches de composant de boisson consiste à préparer une couche de densité inférieure avant une couche de densité supérieure.

14. Procédé selon la revendication 12 ou 13, dans lequel il est mis en oeuvre avec le distributeur selon l'une quelconque des revendications 1 à 11.
